# EUROPEAN PATENT SPECIFICATION

(11) **EP 1 369 017 B1**
(45) Date of publication and mention of the grant of the patent: **10.08.2005**
(21) Application number: 03076535.8
(22) Date of filing: 21.05.2003
(51) Int. Cl.: A01C 15/00, A01C 3/06, A01D 34/00

(54) **An assembly and a manure application machine for performing a manure application**
Zusammensetzung und Düngerstreumaschine zum Durchführen einer Verteilung von Dünger
Ensemble et machine distributeur de fumier pour effectuer une application de fumier

(30) Priority: 06.06.2002 NL 1020803
(43) Date of publication of application: 10.12.2003
(60) Divisional application: 05075706.1
(73) Proprietor: Lely Enterprises AG, 6300 ZUG (CH)
(72) Inventor: Van den Berg, Karel, 2971 BR Bleskensgraaf (NL); Voogd, Lucien Eliza Niels, 4143 HG Leerdam (NL)
(74) Representative: Corten, Maurice Jean F.M.

(56) References cited:
- US-A- 5 528 888
- US-A- 5 974 348
- US-A1- 2002 049 522

## Description

The invention relates to an assembly for performing a manure application according to the preamble of claim 1.

Such an assembly is known from US-A1-2002/0049522. A drawback of the known assembly is that the manure application machine has frequently to be moved to the storage containers, which makes working with the known assembly time-consuming.

The invention aims at providing an assembly for performing a manure application not having or having to a lesser extent the above-mentioned drawback.

For this purpose, an assembly for performing a manure application of the above-described type comprises the features of the characterizing part of claim 1. Due to this, the driving time of the manure application machine to the storage container for the intake of a fresh amount of manure product can be shortened.

In an embodiment of an assembly according to the invention, the conveying device is a mechanically operated conveying device. Although a conveying device that is electro-magnetically operated (for example by means of infrared-signals) may be applied as well, such a way of operating is more sensitive to failures than a mechanically operated conveying device.

For the purpose of moving the autonomous manure application machine in a simple manner to the storage container, it is advantageous if the control-unit is provided with a route-information system for containing at least position information about the storage container, if the opportunity arises also position information with respect to the sub-storage tanks and/or the connecting points for storage. The assembly is in particular provided with a position-determining system for determining the momentary position of the manure application machine.

If the assembly is provided with a measuring device for measuring the amount of product in the storage container or the machine container, it is possible for example to move the autonomous manure application machine to the storage container depending on the measured amount.

The machine container is preferably capable of being disposed on the manure application machine. Alternatively the machine container comprises a dragging hose that can detachably be coupled to the manure application machine.

The invention will be explained hereinafter in further detail with reference to embodiments shown in the drawing, in which:
Figure 1 shows schematically in plan view an autonomous manure application machine in an agricultural parcel in an embodiment of an assembly according to the invention;
Figure 2 shows schematically a perspective view of an autonomous manure application machine for performing a manure application;
Figure 3 shows schematically in plan view the crop-processing parts of an embodiment of a manure application machine, and

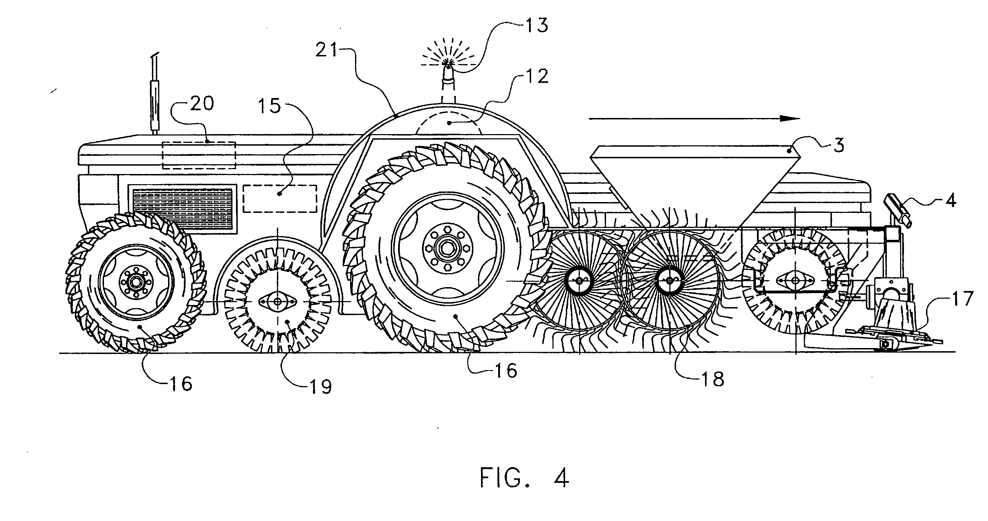

Figure 4 shows schematically in side view the manure application machine according to Figure 3.

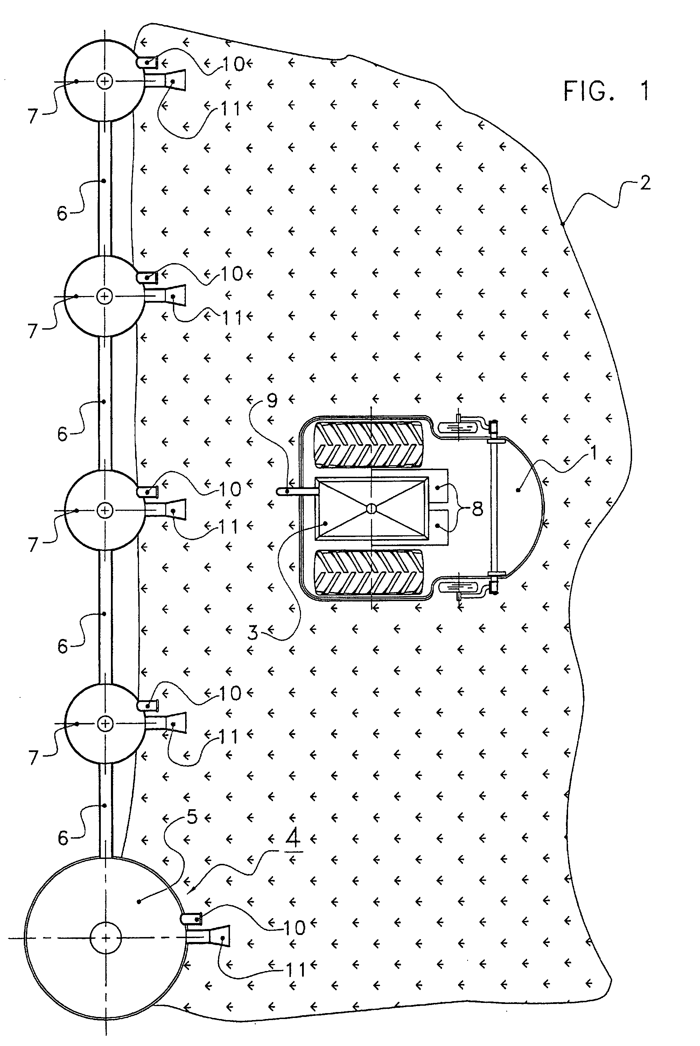

Figure 1 shows schematically in plan view an autonomous manure application machine 1 in an agricultural parcel 2 in an embodiment of an assembly according to the invention. It is pointed out here that an autonomous machine, i.e. a machine that does not require a driver for being moved, is known per se and will not be set out here in further detail for the sake of simplicity of the description. The autonomous manure application machine 1 is suitable for performing a manure application on the agricultural parcel 2. The agricultural parcel 2 is manured for example by means of a manuring-unit known per se, for example a fertilizer spreader or a liquid-manure-spraying device comprising dragging hoses.

The manure application machine 1 comprises a machine container 3 for containing a working stock of manure or fertilizer. The autonomous manure application machine 1 further comprises a (non-shown) route-information system known per se and provided with a memory for containing position data with respect to the agricultural parcel 2. In particular the position of a storage container 4, containing a relatively large amount of manure product, is stored in the memory. According to the invention, the storage container 4 comprises a main storage tank 5 and, connected thereto via lines 6, sub-storage tanks 7. For transporting the manure product from the main storage tank to the sub-storage tanks there may be used for example screw transporters or pumps in the lines 6. The data may be stored for example in the form of a ground plan. The route-information system further comprises a (non-shown) position-determining device known per se for determining the position of the autonomous manure application machine 1 in the agricultural parcel 2 by means of for example a GPS-system. Thus it is possible for the control-unit of the autonomous manure application machine 1 to move the manure application machine 1 to the storage container 4, in particular to the storage tank (or sub-storage tank) that is located closest to the manure application machine, with the aid of data from the route-information system, taking the working stock that is still present, as measured for example by a weighing device 8 or another measuring device, into account.

In the embodiment shown the manure application machine 1 comprises a mechanical protrusion 9 that pushes against a pressure mechanism 10 of the storage tank 5, 7 when the manure application machine 1 has been moved by the control-unit to the relevant storage tank. Subsequently, by a mechanical operation that is comparable with that of a flushing cistern of a lavatory, at least a part of the product can be conveyed to the machine container 3 via a chute 11.

When the stock in the main storage tank 5 has come below a particular level, measured for example by a measuring device such as a weighing device, a corresponding signal can be sent, for example by telephone, by the measuring device to the owner of the parcel or other parties concerned.

In particular if the manure product is liquid, apart from the use of sub-storage tanks that are in liquid-communication with the main storage tank, there can be used connecting points for storage to which for example an end of the dragging hose can be connected or coupled by the manure application machine, by which is also meant that the dragging hose is continuously connected to the connecting point by means of a valve that can be opened and closed by the manure application machine. The other end of the dragging hose can be coupled to the manure application machine, for example by a gripper, so that the dragging hose can be moved over the parcel portion to be manured.

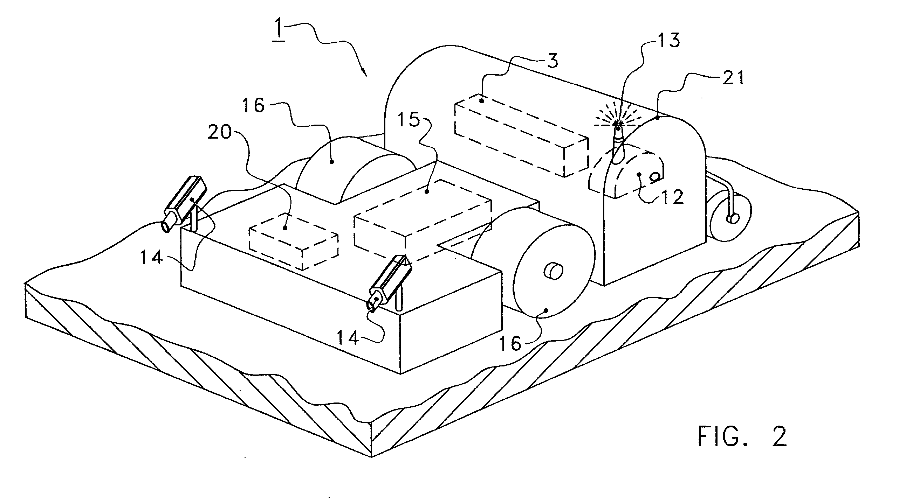

Figure 2 shows schematically a perspective view of an embodiment of an autonomous manure application machine 1 for performing a manure application. The manure application machine further comprises a crop-processing-unit as will be described hereinafter. The machine 1 can be moved autonomously by determining, by means of a position-determining system 12, possibly provided with an aerial 13, the position of the machine 1 in the field to be processed. Such position-determining systems are known per se, for example GPS, DGPS, Galileo, or position determination by means of beacons and the like. The machine 1 further comprises a boundary-detecting system 14, for example one or more cameras or another boundary-detecting system known per se, for detecting a boundary of already mown crop, for example already mown crop that has been tedded or deposited in a swath. In the case that the crop processing does not automatically produce a boundary, the machine can be controlled in such a way that a to be detected boundary is produced. With the aid of data from the position-determining system 12, 13 and/or the boundary-detecting system 14, a control-unit 15 for controlling the machine 1, in particular the driving motor and the wheels 16 thereof, is controlled, so that the machine 1 follows a track in the field to be processed.

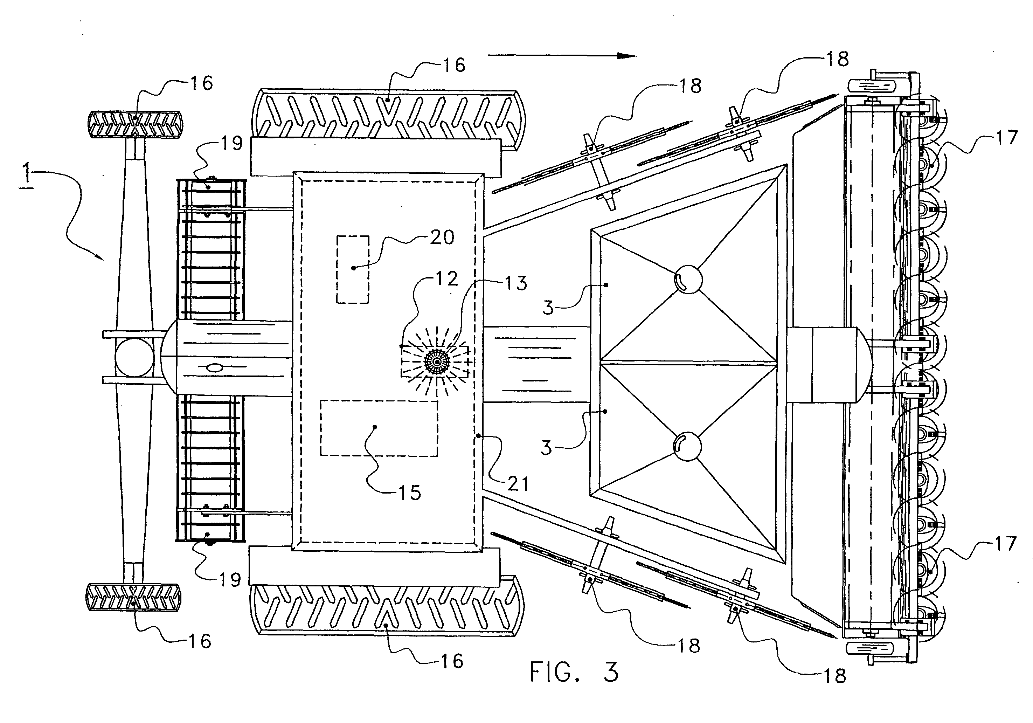

The machine 1 is provided with a mowing-unit 17 (Figure 3) for mowing the crop. Such a mowing-unit 17 may be constituted by the currently often used disc-mowers or (double)-knife mowers. Although a drum-mower may be applied as well, the latter is not preferred because of its heavier weight relative to other mowing-units. However, a cage-mower known per se is extremely suitable. Said cage-mower does not only enable the transport of the mown crop in a simple manner to a receptacle or a drag bag, but is preferable to the other known mowing-units because of its safety.

The machine 1 further comprises a rake-unit 18 for raking mown crop. Such a rake-unit is also known per se and may be constituted for example by swath boards and/or rotating rakes.

There is disposed a tedder-unit 19 for tedding mown crop. Although also here it is possible to use tedder-units known per se, it is advantageous to use a drum-tedder with a comb. The drum-tedder picks up the crop and guides it through the comb, so that a frictional crushing effect is created. By putting the comb out of operation, by pivoting it away for example, there is created a normal drum-tedder that can be used for tedding the crop. Of course, besides a comb, other crushing devices for crushing the crop may be used as well.

The tedder-unit 19 may be provided, if desired, with a (non-shown) pick-up device for picking up the crop.

Depending on the wishes of the user, it is possible for the machine 1 to perform every processing operation separately or several processing operations simultaneously. For this purpose the machine 1 is provided with a switching device 20, for example a computer, for switching on and switching off at least one of the units from the group consisting of the mowing-unit, the rake-unit and the tedder-unit. Here it is advantageous if the switching device is additionally or alternatively suitable for switching on and switching off at least one of the devices from the group consisting of crushing equipment and pick-up equipment. For this purpose the switching device 20 is connected in a proper manner to the relevant units or devices, and is preferably capable of being programmed beforehand and/or remotely.

In order to ensure a safe stay for human beings and animals present in the vicinity of the autonomous manure application machine 1, said machine 1 is provided with a number of protecting means. The machine 1 is provided with a cap 21 covering the crop-processing components, so that in particular the rotating parts are protected. There are further provided detectors, for example constituted by the cameras 14, for detecting living beings present in the vicinity of the machine 1. Said sensors are known per se, and as examples thereof are mentioned picture recognition systems, colour meters, infrared meters, ultrasonic detectors, lasers, mechanical feelers, and conductivity meters. For the sake of security, in particular the rear side is monitored by a plurality of sensors and protected by a plurality of mechanical protecting means, such as protective caps, flaps and the like.

Consequently, the machine 1 can be designed so as to have small dimensions, in particular a length of 400 cm, a width of 200 cm and a maximum weight of 3000 kg are possible, which makes the machine easily transportable. Further a motor with a small capacity of for example 40 kW can be used, so that only a small quantity of fuel needs to be on board for a working duration of for example 12 or 24 hours.

The machine container 3 contains the working stock of fertilizer or manure. The manure application is in particular performed in such a way that the manure material does not get into the final product (for example grass). This can take place by activating the manuring-unit after one of the last processing operations to be performed, such as raking. As manuring-units can be used manuring-units known per se, such as fertilizer spreaders or sowing machines. Due to the fact that the manure application machine is autonomous, it can be designed so as to have small dimensions, so that the manure application can be performed very accurately, and spoiling of the manure material is thus prevented.

## Claims

1. An assembly for performing a manure application, which assembly is provided with an autonomous manure application machine (1) for performing the manure application, with a machine container (3) for containing an amount of manure product, and with a storage container (4) for containing a stock of manure product, the assembly further being provided with a control-unit (15) for automatically moving the manure application machine (1) to the storage container (4), and with a conveying device (11) for automatically conveying the manure product from the storage container (4) to the machine container (3), **characterized in that** the storage container (4) comprises a main storage tank (5) and, connected thereto via lines (6), sub-storage tanks (7) and/or connecting points for storage.

2. An assembly as claimed in claim 1, **characterized in that** the conveying device (11) is a mechanically operated conveying device.

3. An assembly as claimed in claim 1 or 2, **characterized in that** the control-unit (15) is provided with a route-information system for containing at least position information about the storage container (4).

4. An assembly as claimed in any one of the preceding claims, **characterized in that** the assembly is provided with a position-determining system (12) for determining the momentary position of the manure application machine (1).

5. An assembly as claimed in any one of the preceding claims, **characterized in that** the assembly is provided with a measuring device (8) for measuring the amount of product in the storage container (4) or the machine container (3).

6. An assembly as claimed in any one of the preceding claims, **characterized in that** the machine container (3) is a machine container that can be disposed on the manure application machine (1).

7. An assembly as claimed in any one of claims 1 to 6, **characterized in that** the machine container (3) comprises a dragging hose that can detachably be coupled to the manure application machine (1).

## Patentansprüche

1. Anordnung zur Durchführung einer Düngerausbringung, wobei die Anordnung mit einer autonomen Düngerausbringmaschine (1) zur Durchführung der Düngerausbringung, mit einem Maschinenbehälter (3) zur Aufnahme einer Düngemittelmenge und mit einem Vorratsbehälter (4) zur Aufnahme eines Düngemittelvorrats versehen ist, wobei die Anordnung ferner mit einer Steuereinheit (15) zum automatischen Bewegen der Düngerausbringmaschine (1) zu dem Vorratsbehälter (4) und mit einer Beförderungsvorrichtung (11) zum automatischen Befördern des Düngemittels von dem Vorratsbehälter (4) zum Maschinenbehälter (3) versehen ist,
**dadurch gekennzeichnet, daß** der Vorratsbehälter (4) einen Hauptvorratstank (5) und durch Leitungen (6) mit diesem verbundene Nebenvorratstanks (7) und/oder Anschlußstellen zur Aufnahme umfaßt.

2. Anordnung nach Anspruch 1,
**dadurch gekennzeichnet, daß** die Beförderungsvorrichtung (11) eine mechanisch betätigte Beförderungsvorrichtung ist.

3. Anordnung nach Anspruch 1 oder 2,
**dadurch gekennzeichnet, daß** die Steuereinheit (15) mit einem Routeninformationssystem versehen ist, das zumindest Positionsinformationen über den Vorratsbehälter (4) enthält.

4. Anordnung nach einem der vorhergehenden Ansprüche,
**dadurch gekennzeichnet, daß** die Anordnung mit einem Positionsermittlungssystem (12) zur Ermittlung der momentanen Position der Düngerausbringmaschine (1) versehen ist.

5. Anordnung nach einem der vorhergehenden Ansprüche,
**dadurch gekennzeichnet, daß** die Anordnung mit einer Meßvorrichtung (8) zur Messung der Menge des Mittels in dem Vorratsbehälter (4) oder dem Maschinenbehälter (3) versehen ist.

6. Anordnung nach einem der vorhergehenden Ansprüche,
**dadurch gekennzeichnet, daß** es sich bei dem Maschinenbehälter (3) um einen Maschinenbehälter handelt, der auf der Düngerausbringmaschine (1) angeordnet werden kann.

7. Anordnung nach einem der Ansprüche 1 bis 6,
**dadurch gekennzeichnet, daß** der Maschinenbehälter (3) einen Schleppschlauch umfaßt, der lösbar an die Düngerausbringmaschine (1) angeschlossen werden kann.

## Revendications

1. Ensemble destiné à exécuter une application de fumier, lequel ensemble est pourvu d'une machine d'application de fumier (1) autonome destinée à exécuter l'application de fumier, avec un contenant de machine (3) destiné à contenir une quantité de produit de fumier, et avec un contenant de stockage (4) destiné à contenir un stock de produit de fumier, l'ensemble étant pourvu en outre d'une unité de commande (15) destinée à déplacer automatiquement la machine d'application de fumier (1) vers le contenant de stockage (4), et avec un dispositif de transport (11) destiné à transporter automatiquement le produit de fumier du contenant de stockage (4) au contenant de machine (3), **caractérisé en ce que** le contenant de stockage (4) comprend un réservoir de stockage principal (5) et, raccordés à celui-ci via des conduites (6), des réservoirs de sous-stockage (7) et/ou des points de raccordement pour le stockage.

2. Ensemble selon la revendication 1, **caractérisé en ce que** le dispositif de transport (11) est un dispositif de transport à commande mécanique.

3. Ensemble selon la revendication 1 ou 2, **caractérisé en ce que** l'unité de commande (15) est pourvue d'un système d'information d'acheminement destiné à contenir au moins des informations de position concernant le contenant de stockage (4).

4. Ensemble selon l'une quelconque des revendications précédentes, **caractérisé en ce que** l'ensemble est pourvu d'un système de détermination de position (12) destiné à déterminer la position momentanée de la machine d'application de fumier (1).

5. Ensemble selon l'une quelconque des revendications précédentes, **caractérisé en ce que** l'ensemble est pourvu d'un dispositif de mesure (8) destiné à mesurer la quantité de produit dans le contenant de stockage (4) ou le contenant de machine (3).

6. Ensemble selon l'une quelconque des revendications précédentes, **caractérisé en ce que** le contenant de machine (3) est un contenant de machine qui peut être disposé sur la machine d'application de fumier (1).

7. Ensemble selon l'une quelconque des revendications 1 à 6, **caractérisé en ce que** le contenant de machine (3) comprend un tuyau d'entraînement qui peut être couplé de façon amovible à la machine d'application de fumier (1).
